# EUROPEAN PATENT APPLICATION

(11) **EP 2 465 680 A1**
(43) Date of publication of application: **20.06.2012**
(21) Application number: 10808005.2
(22) Date of filing: 21.01.2010
(51) Int. Cl.: B41F 31/02

(54) **PRINTING METHOD AND DEVICE USING ENERGY-CURABLE INKS FOR FLEXOGRAPHIC PRINTERS**

(30) Priority: 13.08.2009 ES 200901769
(71) Applicant: Comexi Group Industries, S.A., 17457 Riudellots de la Selva (Girona) (ES)
(72) Inventor: PUIG, Jordi, 17457 Riudellots de la Selva (Girona) (ES); PUIGDEMONT, Luis, 17457 Riudellots de la Selva (Girona) (ES); MARCÓ, Miquel, 17457 Riudellots de la Selva (Girona) (ES)
(74) Representative: Torner Lasalle, Elisabet
(86) International application number: PCT/ES2010/000028
(87) International publication number: WO 2011/018536

(57) **Abstract**

The printing device using energy-curable inks is applicable to a flexographic printer comprising a printing deck (21) adapted for printing an energy-curable printing ink containing as the components, resin, pigment and a non-reactive evaporable component selected from water or another solvent, on a substrate layer (23) supported on a backpressure roller (24), and an energy emitting unit for curing said ink printed on the substrate layer (23). The printing deck (21) includes an ink application chamber (13) for applying the ink to an inking roller (11) arranged for inking-up a printing roller (12), and means for supplying printing ink from a container (1) to the corresponding ink application chamber (13). The device comprises means for maintaining the ratio of the components of the printing ink substantially constant.

## Description

### Field of the Art

The present invention relates to a device and method for flexographic printing using energy-curable inks (electron beam or thermal energy), particularly inks having a high viscosity and comprising resin, pigments and a non-reactive evaporable component such as water or another solvent as components. These inks are made for a process of wet on wet printing well known in the sector.

The device and apparatus of the invention assures the integrity of the ink used for the printing at all times and therefore an optical density of the printed image.

### Background of the Invention

Patent US-A-6722683 relates to a method for applying multiple layers of ink on a substrate layer where an energy-curable ink of the type generally referred to above is described.

EP-A-1932669 describes a printing device and method using energy-curable inks for a flexographic printer where adjustment means are provided for periodically adjusting values of viscosity, evaporability and temperature in a printing ink.

Assuring that the ink provided by an application chamber is as uniform as possible in terms of its composition is essential in the use of the mentioned high viscosity energy-curable inks for flexographic wet on wet printing to, on one hand, preserve the integrity of said ink (preventing the composition modifications thereof from causing irreversible chemical reactions) and to assure that the optical density of the printed image is completely uniform, such that the amount of pigment which is received per raster unit or pit in the inking roller of a flexographic unit is also constant.

Therefore, it is of interest a device and method (adapted to different types of ink) which is capable of quickly and flexibly correcting the variations which could arise in the composition of an energy-curable ink, before being transferred to the printing rollers, and this invention is applied to said objective.

### Disclosure of the Invention

According to a first aspect, the present invention provides a printing device using energy-curable inks for a flexographic printer of the type integrating at least one printing deck adapted for printing a energy-curable printing ink, which has at least resin, pigment and a non-reactive evaporable component selected from water or another solvent as components, on a substrate layer supported on at least one backpressure roller and an energy emitting unit for directing energy towards said substrate layer for the purpose of curing said printing ink printed on said substrate layer. The mentioned printing deck includes an ink application chamber adapted for applying the printing ink to a pitted surface of an inking roller provided in turn for inking-up a printing roller, supplying means for supplying printing ink from a container to the corresponding ink application chamber being provided. The device of the present invention is **characterized in that** it comprises means for maintaining the ratio of the mentioned components of the printing ink substantially constant.

In one embodiment, said means for maintaining the ratio of the mentioned components of the printing ink substantially constant comprise at least one device for taking the reading of the ratio of the mentioned components of said ink supplied to said application chamber, and means for adding the amount of said non-reactive evaporable component depending on the detected reading for restoring said ratio at all times. The mentioned reading is preferably taken continuously or by means of periodic sampling in at least the ink supply line supplying ink to said ink application chamber. The device comprises a first reading device in the supply line of the ink application chamber and/or a second reading device in the return line for adding the amount of non-reactive evaporable component, coordinated from a control centre, and at least one valve controlled by said control centre depending on the readings obtained by the one or more reading devices for supplying a suitable amount of non-reactive evaporable component for restoring said ratio. Alternatively, the reading device can be installed in said ink supply container. The one or more reading devices can include, for example, viscosimeters.

According to a second aspect, the present invention provides a printing method using energy-curable inks for a flexographic printer of the type comprising the steps of printing an energy-curable printing ink having at least resin, pigment and a non-reactive evaporable component selected from water or another solvent as components, on a substrate layer supported by a backpressure roller by means of at least one printing deck, and curing the printing ink printed on said substrate layer by means of an energy emitting unit for directing energy towards said substrate layer, where said step of printing comprises, for each printing deck, supplying said printing ink by supplying means from a container to a corresponding ink application chamber adapted for applying the printing ink to a pitted surface of an inking roller provided in turn for inking-up a corresponding printing roller. The method of the present invention is characterized by maintaining the ratio of the mentioned components of the printing ink substantially constant.

In one embodiment, the method comprises taking the reading of the ratio of the mentioned components of said ink supplied to said application chamber and adding the amount of said non-reactive evaporable component depending on the detected reading for restoring said ratio at all times in said printing ink. Said reading comprises an ink viscosity reading taken preferably continuously or by means of periodic sampling of at least one ink supply line supplying ink to said ink application chamber, although the reading can alternatively be taken in at least two points of the ink circuit or in the ink supply container. The NREC (non-reactive evaporable component) is added to the ink in the container depending on the reading obtained for maintaining the NREC ratio constant therein. The ink temperature is optionally controlled to minimise the evaporation of said NREC and assure a correct viscosity reading.

### Brief Description of the Drawings

The foregoing and other features and advantages will be more clearly understood from the following detailed description of exemplary embodiments with reference to the attached drawings, in which:
Figure 1 is a schematic diagram of a printing device using energy-curable inks for a flexographic printer according to an embodiment of the present invention;
Figure 2 is a schematic diagram of a printing device using energy-curable inks for a flexographic printer according to another embodiment of the present invention;
Figure 3 is a schematic diagram of a printing device using energy-curable inks for a flexographic printer according to yet another embodiment of the present invention;

### Detailed Description of Exemplary Embodiments

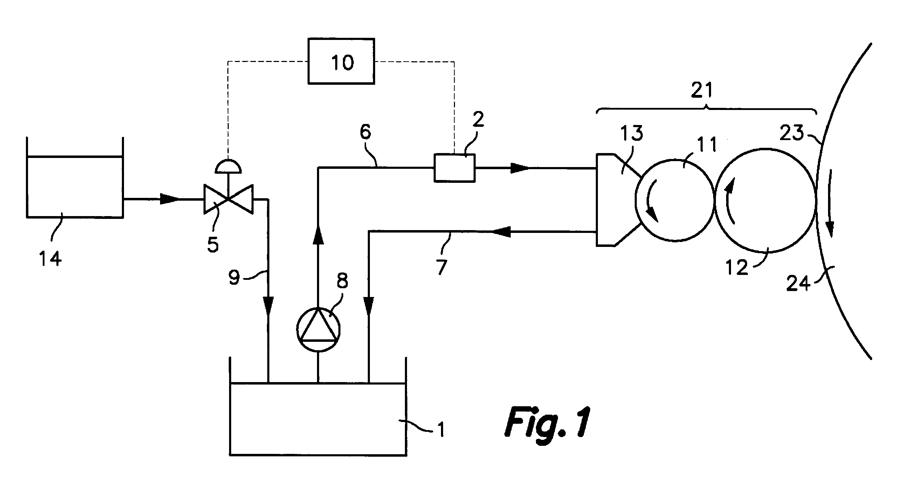

First referring to Figure 1, a possible embodiment of a printing device using energy-curable inks for a flexographic printer according to the present invention is described. The mentioned flexographic printer generally comprises one or more printing decks 21 (only one of which is shown in Figure 1) adapted for printing respective energy-curable printing inks on a substrate layer 23 supported on at least one backpressure roller 24. The flexographic printer could alternatively have a single printing deck 21 and a single backpressure roller 24 or several printing decks 21 each associated with a corresponding backpressure roller 24.

The energy-curable printing inks have at least resin, pigment and a non-reactive evaporable component (occasionally abbreviated herein as NREC) selected from water or another solvent as components, and are adapted for a wet on wet printing method according to which, when the flexographic printer has several printing decks, these print the inks successively, one on top of another, on the substrate layer 23 and a joint curing thereof is performed at the end of the printing process by means of an energy emitting unit (not shown) arranged for directing energy towards said printing inks printed on the substrate layer 23.

Each printing deck 21 comprises an ink application chamber 13 adapted for applying the printing ink to a pitted surface of an inking roller 11 arranged in turn for inking-up a printing roller 12 rotating in contact with the substrate layer 23 which moves supported on the backpressure roller 24. The flexographic printer includes ink supplying means comprising an ink container 1, an ink supply line 6 connected to an inlet of the corresponding ink application chamber 13 and an ink return line 7 returning ink from an outlet of the ink application chamber 13 to the ink container 1. A pump 8 is arranged in said ink supply line 6 to drive the ink along the supply and return circuit.

The device of the present invention comprises, for each printing deck 21, means for maintaining the ratio of the mentioned components of the printing ink substantially constant, which in the embodiment shown in Figure 1 include a reading device 2, comprising for example a viscosimeter, arranged for measuring the ink viscosity, which is equivalent to the ratio of the mentioned non-reactive evaporable component of the ink, in the ink supply line 6 supplying ink to the ink application chamber 13, and means for adding a suitable amount of the non-reactive evaporable component for restoring said ratio at all times depending on the result of the reading obtained. To that end, the device includes a non-reactive evaporable component (NREC) container 14 in communication with the ink container 1 through a NREC supply line 9 and an electrically controlled valve 5. The mentioned reading device 2 is connected to a control centre 10 to take the reading in the ink supply line 6 continuously or by means of periodic sampling, and the control centre 10 controls said valve 5 for supplying the suitable amount of non-reactive evaporable component for restoring said ratio at all times.

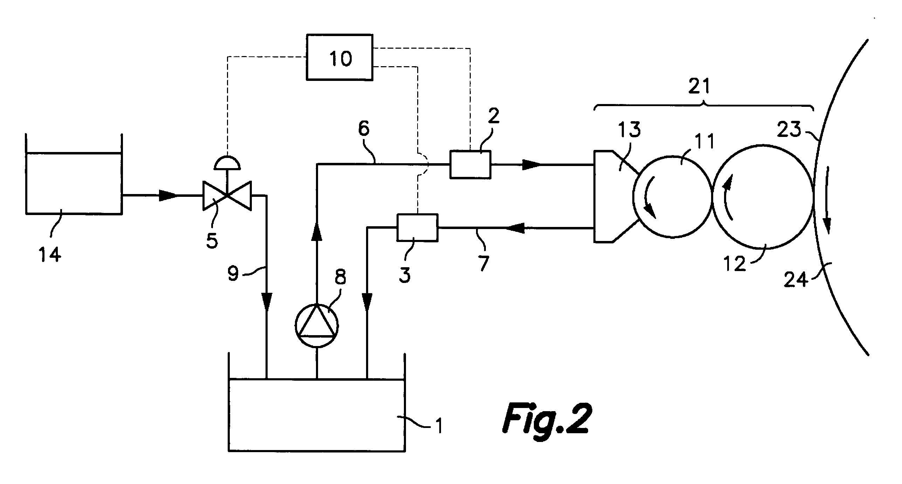

Figure 2 shows an alternative embodiment of the device of the present invention which is entirely similar to the embodiment described above in relation to Figure 1 except that in this embodiment, the device comprises a first reading device 2 located in the ink supply line 6 supplying ink to the ink application chamber 13 and a second reading device 3 located in the ink return line 7 for taking the ink viscosity reading. Both first and second reading devices 2, 3 can include for example viscosimeters, and are connected to the control centre 10 such that they are coordinated therefrom. Based on the processing of the measurements supplied by the first and second reading devices 2, 3 the control centre 10 acts to control the valve 5 in the manner described above.

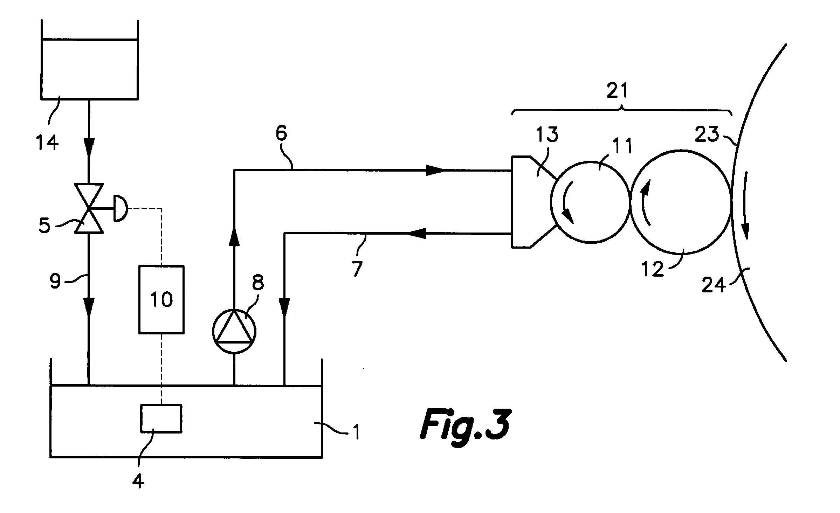

Figure 3 shows another alternative embodiment of the device of the present invention, which is entirely similar to the embodiment described above in relation to Figure 1 except that in this embodiment, the device comprises a reading device 4, including for example a viscosimeter, installed for taking the viscosity reading of the ink in the ink container 1. The reading device 4 is connected to the control centre 10 and the control centre controls the valve 5 depending on the readings obtained such as in the above embodiments.

In the illustrated embodiments, the NREC container 14 is located at a higher level than the ink container 1 such that the non-reactive evaporable component flows by gravity through the supply line 9 from the NREC container 14 to the ink container 1. However, the NREC container 14 could be at a lower level and the non-reactive evaporable component could be supplied with the aid of a pump (not shown) controlled, for example, from the control centre 10.

A person skilled in the art will be able to carry out modifications and variations from the shown and described embodiments without departing from the scope of the present invention as defined in the attached claims.

## Claims

1. A printing device using energy-curable inks for a flexographic printer of the type integrating at least one printing deck (21) adapted for printing an energy-curable printing ink having at least resin, pigment and a non-reactive evaporable component (selected from water or another solvent) as components, on a substrate layer (23) supported on at least one backpressure roller (24), and an energy emitting unit for directing energy towards said substrate layer (23) for the purpose of curing said printing ink printed on said substrate layer (23), wherein said printing deck (21) includes an ink application chamber (13) adapted for applying the printing ink to a pitted surface of an inking roller (11) provided in turn for inking-up a printing roller (12), supplying means for supplying printing ink from an ink container (1) to the corresponding ink application chamber (13) being included, **characterized in that** it comprises means for maintaining the ratio of the mentioned components of the printing ink substantially constant.

2. The device according to claim 1, **characterized in that** said means for maintaining the ratio of the mentioned components of the printing ink substantially constant comprise:
- at least one reading device (2, 3, 4) for reading the ratio of the mentioned components of said ink supplied to said ink application chamber (13); and
- means for adding a suitable amount of said non-reactive evaporable component for restoring said ratio at all times depending on the detected reading.

3. The device according to claim 2, **characterized in that** said reading device (2) is arranged in an ink supply line (6) supplying ink to said ink application chamber (13).

4. The device according to claim 2, **characterized in that** it comprises a first reading device (2) in the ink supply line (6) supplying ink from the ink container (1) to the ink application chamber (13) and/or a second reading device (3) in an ink return line (7) returning ink from the ink application chamber (13) to the ink container (1), said first and/or second reading devices (2, 3) being coordinated from a control centre (10).

5. The device according to claim 2, **characterized in that** said reading device (4) is installed in said ink container (1).

6. The device according to claim 3, 4 or 5, **characterized in that** said reading is taken continuously or by means of periodic sampling.

7. The device according to any one of claims 2 to 6, **characterized in that** said means for adding the amount of non-reactive evaporable component comprise at least one valve (5) controlled by a control centre (10) depending on the reading obtained by said reading device(s) (2, 3, 4) for supplying a suitable amount of non-reactive evaporable component for restoring said ratio.

8. The device according to any one of claims 2 to 7, **characterized in that** said reading device incorporates at least one viscosimeter.

9. A printing method using energy-curable inks for a flexographic printer of the type comprising the steps of printing an energy-curable printing ink having at least resin, pigment and a non-reactive evaporable component (selected from water or another solvent) as components, on a substrate layer supported by a backpressure roller (24) by means of at least one printing deck (21), and curing the printing ink printed on said substrate layer (23) by means of an energy emitting unit (22) for directing energy towards said substrate layer (23), wherein said step of printing comprises, for each printing deck (21), supplying said printing ink by supplying means from an ink container (1) to a corresponding ink application chamber (13) adapted for applying the printing ink to a pitted surface of an inking roller (11) arranged in turn for inking-up a corresponding printing roller (12), **characterized by** maintaining the ratio of the mentioned components of the printing ink substantially constant.

10. The method according to claim 9, **characterized in that** it comprises:
reading the ratio of the mentioned components of said ink supplied to said application chamber; and
adding the amount of said non-reactive evaporable component depending on the detected reading for restoring said ratio at all times in said printing ink.

11. The method according to claim 10, **characterized in that** said reading is taken continuously or by means of periodic sampling in at least one ink supply line (6) supplying ink to said ink application chamber.

12. The method according to claim 10, **characterized in that** said reading is taken continuously or by means of periodic sampling in at least two points of the ink circuit.

13. The method according to claim 10, **characterized in that** said reading is taken continuously or by means of periodic sampling in the ink supply container.

14. The method according to any one of claims 10 to 13, **characterized in that** said reading comprises obtaining at least the ink viscosity.

15. The method according to claim 9, **characterized in that** said NREC is added to the ink container.

16. The method according to claim 14, **characterized in that** the ink temperature is controlled in order to minimise the evaporation of said NREC and assure a correct reading of said viscosity.
